# EUROPEAN PATENT APPLICATION

(11) **EP 4 538 910 A1**
(43) Date of publication of application: **16.04.2025**
(21) Application number: 23819933.5
(22) Date of filing: 09.06.2023
(51) Int. Cl.: G06F 21/32

(54) **AUTHENTICATION DEVICE AND AUTHENTICATION METHOD**

(30) Priority: 10.06.2022 JP 2022094622
(71) Applicant: Panasonic Intellectual Property Management Co., Ltd., Kadoma-shi, Osaka 571-0057 (JP)
(72) Inventor: FUKUDA, Teppei, Kadoma-shi, Osaka 571-0057 (JP); YAMAZAKI, Ryuji, Kadoma-shi, Osaka 571-0057 (JP)
(74) Representative: Eisenführ Speiser
(86) International application number: PCT/JP2023/021628
(87) International publication number: WO 2023/238953

(57) **Abstract**

This authentication device includes: an acquisition unit that acquires at least first biometric information of an authentication target used for first biometric authentication and first surrounding environment information at the time of acquisition of the first biometric information; a score calculation unit that calculates a score of the first biometric authentication using the first biometric information; a reliability determination unit that determines reliability of the first biometric information from the first surrounding environment information; and a continuous processing determination unit that, on the basis of the score of the first biometric authentication and the reliability of the first biometric information, determines whether or not to execute second biometric authentication using second biometric information different from the first biometric information.

## Description

### TECHNICAL FIELD

The present disclosure relates to an authentication device and an authentication method.

### BACKGROUND ART

Patent Literature 1 discloses a personal authentication system configured to execute personal authentication in response to an authentication request from a server. The personal authentication system includes an authentication unit having a function of performing authentication based on biometric information and outputting a score that is similarity of the biometric information or a hash value thereof. The personal authentication system includes a score log storage unit that stores a score of personal authentication or a log of the hash value thereof obtained by the authentication unit. The personal authentication system includes a processing unit that, based on the score or the log of the hash value read from the score log storage unit, determines that the authentication has failed when the same score occurs a plurality of times in succession.

### CITATION LIST

### PATENT LITERATURE

Patent Literature 1: JP2005-251215A

### SUMMARY OF INVENTION

### TECHNICAL PROBLEM

In recent years, there has been a personal authentication technology that performs personal authentication, by using biometric information, to determine whether a person to be authenticated matches a person registered in advance. In the personal authentication technology, it is expected security against impersonation or the like will be improved by authentication (hereinafter, referred to as multimodal authentication) using a plurality of types of (multimodal) biometric authentication units.

In a personal authentication system described in Patent Literature 1, in a case where the score when the authentication is performed using the authentication unit based on certain biometric information is lower than a predetermined lowest level, the processing unit stops the processing without proceeding to the next authentication processing. However, depending on the environment in which the biometric information is acquired, there is a possibility that the score becomes lower than that acquired under an optimal environment. For example, in a case where the authentication is executed from a captured image of a face of the person to be authenticated captured by a camera, if a surrounding environment of the person to be authenticated is dark, the face of the captured image may become unclear and the score may decrease. As described above, when the biometric information is acquired in an inappropriate environment, there is a possibility that the score becomes low, the authentication is stopped, and the multimodal authentication is not appropriately performed. As a result, in the multimodal authentication of the related art, there has been a problem of false authentication, in which it is determined that the person to be authenticated is not, even if actually is, a target person, resulting in reduced authentication accuracy.

The present invention has been made in view of such circumstances, and an object thereof is to achieve highly accurate authentication in consideration of the quality of biometric information used for authentication of personal verification.

### SOLUTION TO PROBLEM

The present disclosure provides an authentication device including: an acquisition unit configured to acquire at least first biometric information of a person to be authenticated used for first biometric authentication and first surrounding environment information at the time of acquiring the first biometric information; a score calculation unit configured to calculate a score of the first biometric authentication using the first biometric information; a reliability determination unit configured to determine reliability of the first biometric information from the first surrounding environment information; and a continued processing determination unit configured to determine whether to perform second biometric authentication using second biometric information different from the first biometric information based on the score of the first biometric authentication and the reliability of the first biometric information.

Further, the present disclosure provides an authentication method performed by an authentication device that performs personal verification of a person to be authenticated, the authentication method including: acquiring at least first biometric information of the person to be authenticated used for first biometric authentication and first surrounding environment information at the time of acquiring the first biometric information; calculating a score of the first biometric authentication using the first biometric information; determining reliability of the first biometric information from the first surrounding environment information; and determining whether to perform second biometric authentication using second biometric information different from the first biometric information based on the score of the first biometric authentication and the reliability of the first biometric information.

These comprehensive or specific aspects may be implemented by a system, a device, a method, an integrated circuit, a computer program, or a recording medium, and may be implemented by any combination of the system, the device, the method, the integrated circuit, the computer program, and the recording medium.

### ADVANTAGEOUS EFFECTS OF INVENTION

According to the present disclosure, it is possible to achieve highly accurate authentication in consideration of the quality of the biometric information used for the authentication of the personal verification.

### BRIEF DESCRIPTION OF DRAWINGS

FIG. 1 is a diagram illustrating an example of authentication determination of personal verification.
FIG. 2 is a diagram illustrating a hardware configuration of an authentication system according to the present embodiment.
FIG. 3 is a diagram illustrating an internal configuration of a processor according to the present embodiment.
FIG. 4 is a diagram illustrating an example of case classification of determination results according to the present embodiment.
FIG. 5 is a flowchart illustrating continued processing of biometric authentication according to Embodiment 1.
FIG. 6 is a conceptual diagram of a case in which second biometric authentication is selected based on first biometric authentication.
FIG. 7 is a diagram illustrating an example of an authentication method when the reliability of all the biometric authentications is low.
FIG. 8 is a diagram illustrating an example in which it is determined from results of a plurality of the biometric authentications that a person to be authenticated is not a target person.
FIG. 9 is a flowchart of continued processing of biometric authentication according to Embodiment 2.
FIG. 10 is a diagram illustrating an example of determining first biometric authentication based on information on a surrounding environment acquired before start of the authentication.
FIG. 11 is a diagram illustrating an example of the reliability of each piece of biometric information.

### DESCRIPTION OF EMBODIMENTS

Hereinafter, embodiments in which an authentication device and an authentication method according to the present disclosure are specifically disclosed will be described in detail with reference to the drawings as appropriate. However, unnecessarily detailed description may be omitted. For example, detailed description of already well-known matters and redundant description of substantially the same configuration may be omitted. This is to avoid unnecessary redundancy of the following description and to facilitate understanding by those skilled in the art. It should be noted that the accompanying drawings and the following description are provided for those skilled in the art to sufficiently understand the present disclosure, and are not intended to limit the subject matter described in claims.

### <Summary of Invention>

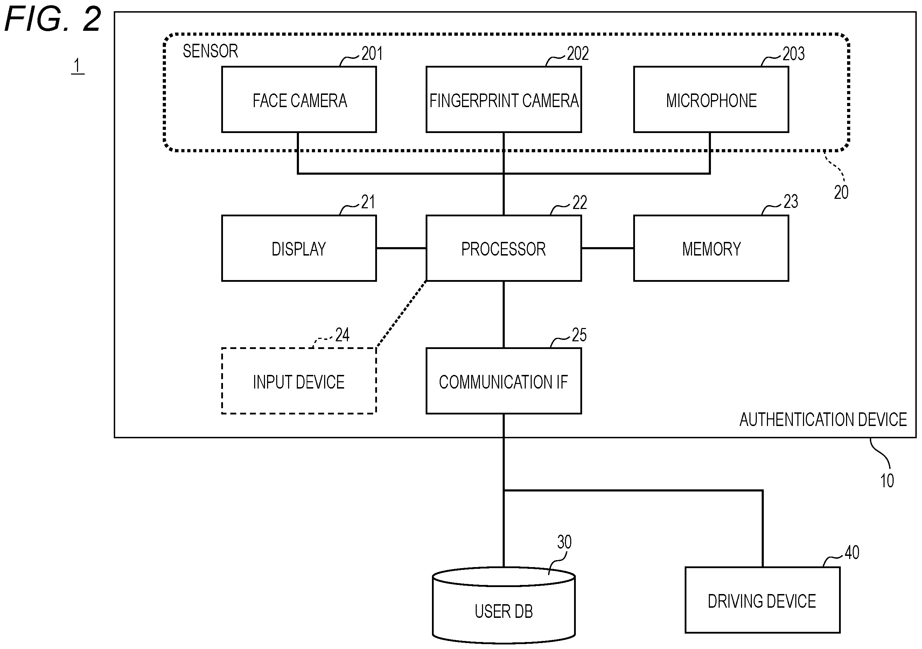

An authentication device 10 (see FIG. 2) according to the present embodiment performs authentication of personal verification of a person to be authenticated by collating biometric information registered in advance with biometric information acquired by various sensors. The authentication device 10 performs multimodal authentication based on a plurality of pieces of biometric information. The authentication device 10 compares the acquired biometric information of the person to be authenticated with the biometric information registered in advance, and calculates a match rate as a score. However, there is a possibility that the quality of the biometric information decreases and the accuracy of authentication deteriorates depending on an environment in which the biometric information is acquired. Further, since the multimodal authentication takes time to acquire the plurality of pieces of biometric information, there is a possibility that a burden on the person to be authenticated increases. The authentication device 10 estimates not only the score but also the quality of the biometric information to calculate the reliability of the score. By integrating a plurality of modalities in consideration of the reliability of the score, highly accurate and highly efficient authentication is achieved. Hereinafter, an index calculated based on the quality of the biometric information (in other words, an index indicating whether data of the biometric information used for the biometric authentication is reliable) is referred to as reliability. For example, the score and the reliability of the score are calculated by comparing the acquired biometric information with the biometric information registered in advance. In general, the biometric information acquired from a sensor such as a camera or a microphone includes noise that is not related to individuality in addition to information indicating individuality of the person to be authenticated. For example, noise contained in the image, or accessories not directly related to the individuality, such as glasses, sunglasses, or a mask, are included in a face image as noise unrelated to the individuality. Background noise such as environmental sound is included in a voice as noise unrelated to the individuality. When the noise component is relatively large compared to the component representing the individuality of the person to be authenticated, it is estimated that the quality of the biometric information is low. When the quality of the biometric information is low, the score obtained from the biometric information has low reliability. The reliability can be estimated based on brightness of the image, a background noise level other than a section in which the person to be authenticated is speaking, or the like.

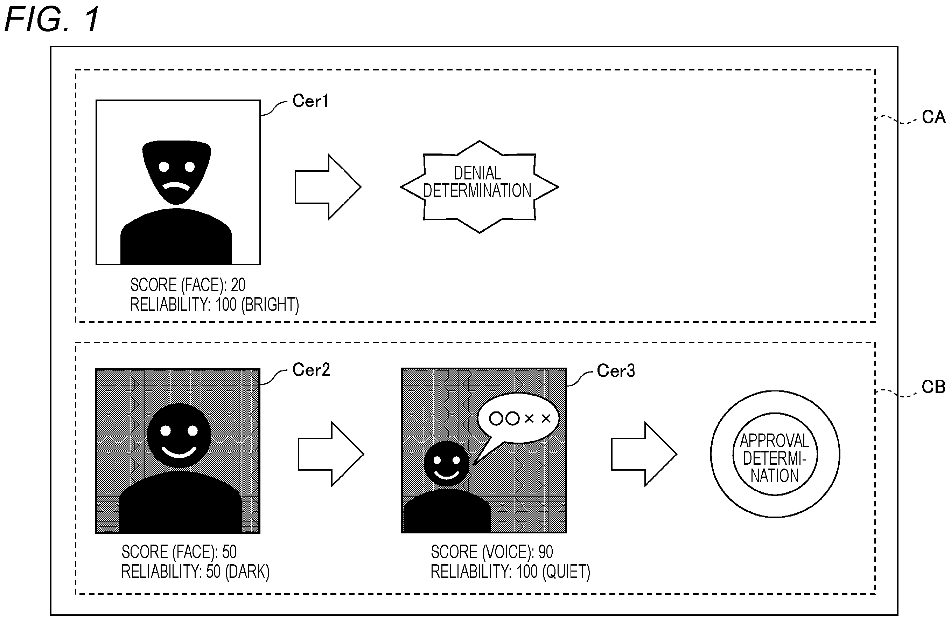

An overview of authentication determination of personal verification will be described with reference to FIG. 1. FIG. 1 is a diagram illustrating an example of the authentication determination of the personal verification.

A case CA indicates an example in which it is determined that the person to be authenticated is not a target person. Hereinafter, the determination that the person to be authenticated is not the target person as a result of biometric authentication is referred to as denial determination.

Authentication Cer1 acquires biometric information related to a face of the person to be authenticated, and indicates a result of biometric authentication by comparing it with the biometric information of the person stored in advance. The score takes a value from 0 to 100, for example, and the score increases as the numerical value increases. That is, a processing result of the biometric authentication is high. A numerical value of the reliability is similar to that of the score. That is, this indicates that the larger the numerical value is, the higher the reliability is, and the environment at the time of acquiring the biometric information is more suitable for the execution of the biometric authentication using the biometric information. The numerical values of the score and the reliability are examples and are not limited to 0 to 100. The score of the authentication Cer1 is a low value of 20. Since the authentication Cer1 acquires biometric information related to the face of the person to be authenticated in a bright environment to such an extent that the face can be sufficiently determined, the reliability of the score is a high value of 100. As a result, the case CA is determined as the denial determination based on the values of the score and the reliability of authentication Cer1.

A case CB indicates an example in which it is determined that the person to be authenticated is the target person. Hereinafter, the determination that the person to be authenticated is the target person as the result of the biometric authentication is referred to as approval determination.

Authentication Cer2 acquires the biometric information related to the face of the person to be authenticated, and indicates a result of biometric authentication by comparing it with the biometric information of the person stored in advance. The score of the authentication Cer2 is a low value of 50. However, in the authentication Cer2, since the biometric information related to the face is acquired in a dark environment in which the face of the person to be authenticated is unclear, the reliability of the score becomes a low value of 50. As a result, it is determined that the biometric information score of authentication Cer2 has low reliability and additional authentication is necessary.

Authentication Cer3 is a result of biometric authentication performed after the authentication Cer2. In the authentication Cer3, the utterance of the person to be authenticated, which is biometric information different from the biometric information related to the face used in the authentication Cer2 performed in advance, is picked up. The score of the authentication Cer3 is a high value of 90. Since the authentication Cer3 acquires the biometric information related to the utterance of the person to be authenticated in a quiet environment to such an extent that the utterance can be sufficiently determined, the reliability of the score is a high value of 100.

From the results of the authentication Cer2 and the authentication Cer3, the case CB is the approval determination.

Hereinafter, the initial biometric authentication (authentication Cer2 in the case CB) is referred to as first biometric authentication, and a second biometric authentication (authentication Cer3 in the case CB) is referred to as second biometric authentication. The number of times of authentication is not limited to two, and may be two or more. For convenience of description, the terms first biometric authentication and second biometric authentication will be used. The biometric information used in the first biometric authentication is referred to as the first biometric information, and the biometric information used in the second biometric authentication is referred to as the second biometric information.

Hereinafter, information related to an external environment acquired in the first biometric authentication is referred to as first environmental information, and information related to an external environment acquired in the second biometric authentication is referred to as second environmental information.

As described above, the authentication device 10 according to the present embodiment integrally determines the score and the reliability of the biometric information of the person to be authenticated, and executes the authentication related to the personal verification of the person to be authenticated.

### <Hardware Configuration of Present Embodiment>

Next, a hardware configuration of the authentication system according to the present embodiment will be described with reference to FIG. 2. FIG. 2 is a diagram illustrating the hardware configuration of the authentication system according to the present embodiment.

An authentication system 1 includes an authentication device 10, a user DB 30, and a driving device 40. Here, DB represents a database. The user DB 30 and the driving device 40 may be provided in the authentication device 10.

The authentication device 10 includes a sensor 20, a display 21, a processor 22, a memory 23, and a communication IF 25. Here, IF represents an interface. The authentication device 10 is, for example, a housing including the sensor 20 for the biometric authentication. The authentication device 10 may be a tablet, a personal computer (PC), a mobile terminal, or the like. Further, the authentication device 10 may be a single device including a plurality of sensors, or may be implemented by a plurality of devices including at least one sensor. The authentication device 10 is installed, for example, at an entrance of a commercial facility, an amusement park, a tourist spot, or a building, and is used for personal verification of a visitor. The authentication device 10 is mounted on an automatic teller machine (ATM), and is used for personal verification of a user. An installation location of the authentication device 10 is merely an example, and is not limited thereto.

The sensor 20 includes a face camera 201, a fingerprint camera 202, and a microphone 203. The face camera 201 and the fingerprint camera 202 may be the same camera.

The face camera 201 is a camera that images the face of the person to be authenticated. The face camera 201 includes at least a lens (not illustrated) as an optical element and an image sensor (not illustrated). The lens receives light reflected from an object within an angle of view of a region captured by the face camera 201, and forms an optical image of the object on a light receiving surface (in other words, an imaging surface) of the image sensor. The image sensor is, for example, a solid-state imaging element such as a charged coupled device (CCD) or a complementary metal oxide semiconductor (CMOS). The image sensor converts the optical image formed on the imaging surface via the lens into an electric signal every predetermined time (for example, 1/30 (second)) and sends the electric signal to the processor 22. For example, when the predetermined time is 1/30 (second), a frame rate of the face camera 201 is 30 fps. Further, the face camera 201 may generate image data (video data) by executing predetermined signal processing on the electric signal every predetermined period of time described above. Processing of generating the image data (video data) may be executed by the processor 22. The face camera 201 outputs the image data (video data) to the processor 22. Hereinafter, the image data or the video data is referred to as imaging data.

The fingerprint camera 202 is a camera that images a fingerprint of the person to be authenticated. The fingerprint camera 202 includes at least a lens (not illustrated) as an optical element and an image sensor (not illustrated). The lens receives light reflected from an object within an angle of view of a region captured by the fingerprint camera 202, and forms an optical image of the object on a light receiving surface (in other words, an imaging surface) of the image sensor. The image sensor is, for example, a solid state image element such as a CCD or a CMOS. The image sensor converts the optical image formed on the imaging surface via the lens into an electric signal every predetermined time (for example, 1/30 (second)) and sends the electric signal to the processor 22. Further, the fingerprint camera 202 may generate imaging data by executing predetermined signal processing on the electric signal every predetermined period of time described above. Processing of generating the imaging data may be executed by the processor 22. The fingerprint camera 202 outputs the imaging data to the processor 22.

The face camera 201 and the fingerprint camera 202 may acquire information on a surrounding environment of the authentication device 10 (hereinafter, referred to as surrounding environment information). The surrounding environment information acquired by the face camera 201 or the fingerprint camera 202 is, for example, brightness. The acquisition of the surrounding environment information is not limited to the face camera 201 and the fingerprint camera 202, and the information may be acquired from a sensor including a separate camera provided in the authentication device 10 or externally.

The microphone 203 picks up the utterance of the person to be authenticated. The microphone 203 is implemented by a microphone device capable of picking up a voice (that is, detecting a voice signal) generated based on the utterance of the person to be authenticated. The microphone 203 picks up the voice generated based on the utterance of the person to be authenticated, converts the voice into an electric signal as sound pickup data, and outputs the electric signal to the processor 22.

The microphone 203 may acquire the surrounding environment information. The surrounding environment information is, for example, noise other than an utterance voice of the person to be authenticated. The acquisition of the surrounding environment information is not limited to the microphone 203, and may be acquired from a sensor including a separate microphone provided in the authentication device 10 or externally.

The display 21 displays an authentication result acquired from the processor 22. The display 21 may be omitted from the configuration of the authentication device 10. For example, the authentication result can be known by opening and closing a door such as when opening the door using the biometric authentication, the display of the authentication result on the display 21 is not necessary.

The processor 22 is implemented using a semi-conductor chip on which at least one of electronic devices such as a central processing unit (CPU), a digital signal processor (DSP), a graphical processing unit (GPU), and a field programmable gate array (FPGA) is mounted. The processor 22 functions as a controller that controls the overall operation of the authentication device 10, and executes control processing for controlling operation of each unit of the authentication device 10, data input and output processing between the units of the authentication device 10, data calculation processing, and data storage processing.

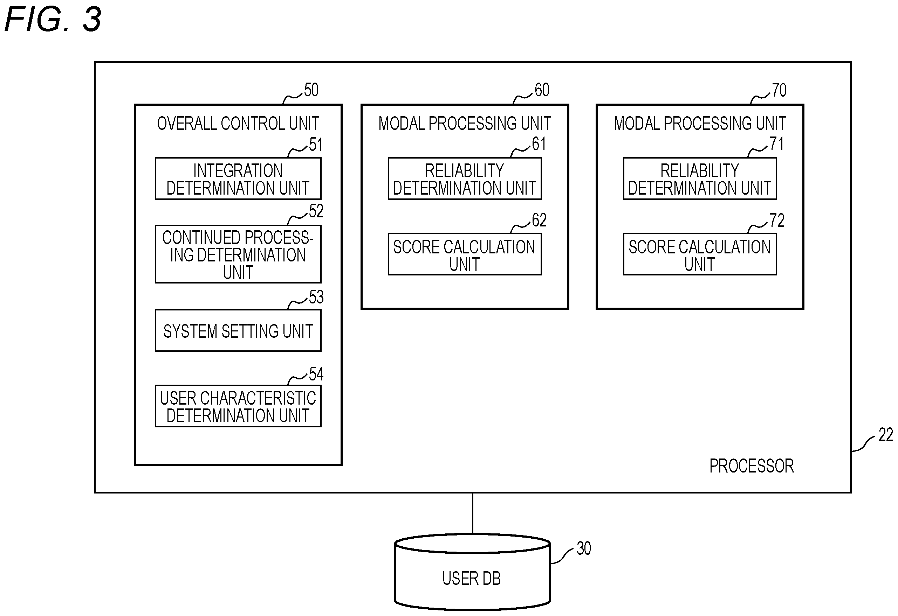

The processor 22 implements the functions of an overall control unit 50 (see FIG. 3), a modal processing unit 60 (see FIG. 3), and a modal processing unit 70 (see FIG. 3) by using programs and data stored in a read only memory (ROM) of the memory 23. The processor 22 uses a random access memory (RAM) of the memory 23 during operation to temporarily store, in the RAM of the memory 23, data or information generated or acquired by the processor 22 and each unit.

The memory 23 includes at least the ROM that stores, for example, a program that defines various kinds of processing executed by the processor 22 and data used during execution of the program, and the RAM serving as a work memory used when various kinds of processing executed by the processor 22 are executed. In the ROM 22, the program that defines various kinds of processing executed by the processor 22 and the data used during execution of the program are written. The RAM temporarily stores data or information generated or acquired by the processor 22 (for example, the biometric information or the score and the reliability of the biometric information acquired by the sensor 20, or the like). The ROM may be replaced by, for example, a storage medium such as a flash memory, a hard disk drive (HDD), or a solid-state drive (SSD), or a server device outside the authentication device, and the data may be processed to be read at the time of activation of the device.

The input device 24 receives an input from the person to be authenticated. The input device 24 is, for example, a touch panel display or a sensor capable of authenticating an entry pass or an employee ID card. The input device 24 accepts input of a name, sex, age, ID, password, or the like from the person to be authenticated. The input device 24 may acquire information on the input content from the user DB 30 and perform authentication with an acquired person (that is, one-to-one authentication). The input device 24 may be omitted from the configuration of the authentication device 10.

The communication IF 25 is a network interface circuit that performs wireless or wired communication between the authentication device 10 and each of the user DB 30 and the driving device 40. Examples of a communication method used for communication of the communication IF 25 include mobile communication such as a wide area network (WAN), a local area network (LAN), a long term evolution (LTE), and 5G, power line communication, near field communication (for example, Bluetooth (registered trademark) communication), or communication for mobile phones.

The user DB 30 is implemented by a storage medium (for example, a flash memory, a hard disk drive (HDD), or a solid state drive (SSD)). The user DB 30 stores data of the biometric information registered in advance and various kinds of information (name, age, sex, face image, ID, password, or the like) that are obtained in the past from a person and used in authentication processing. The biometric information includes imaging data of the face, feature data of features on the imaging data of the face, fingerprint or utterance voice data extracted from a person in the past, feature data of features on the fingerprint imaging data, feature data of the utterance voice, or the like. The biometric information is not limited thereto. The user DB 30 may be stored on a cloud server and connected to the authentication device 10 via a network.

For example, the driving device 40 executes operation such as opening and closing a gate installed near the authentication device 10, sounding a buzzer from a speaker mounted on the authentication device 10, or turning on or blinking a light (for example, LED light) mounted on the authentication device 10. The operation executed by the driving device 40 is not limited thereto.

### <Internal Configuration of Processor According to Present Embodiment>

Next, an internal configuration of the processor according to the present embodiment will be described with reference to FIG. 3. FIG. 3 is a diagram illustrating the internal configuration of the processor according to the present embodiment.

The processor 22 implements functions of the overall control unit 50, the modal processing unit 60, and the modal processing unit 70. The overall control unit 50, the modal processing unit 60, and the modal processing unit 70 may be built in the function of one processor as shown in FIG. 3, or may be built in the function of another processor. The number of modal processing units is not limited to two, and may be two or more depending on the type of biometric information used for authentication.

The overall control unit 50 executes processing related to the authentication of the personal verification of the person to be authenticated. The overall control unit 50 acquires scores and reliability calculated from the modal processing unit 60 and the modal processing unit 70. The overall control unit 50 includes an integration determination unit 51, a continued processing determination unit 52, a system setting unit 53, and a user characteristic determination unit 54.

The integration determination unit 51 determines the approval determination or the denial determination from a determination result of the first biometric authentication acquired from the continued processing determination unit 52 or two determination results of the first biometric authentication and the second biometric authentication. The number of biometric authentication used by the integration determination unit 51 may be two or more.

The integration determination unit 51 executes processing using a score and reliability related to a plurality of pieces of biometric information (for example, imaging data of a face, imaging data of a fingerprint, and sound pickup data of an utterance). For example, the integration determination unit 51 calculates a total value of scores related to the plurality of pieces of biometric information. The integration determination unit 51 compares the total value of the scores with a threshold related to the total value to determine whether the person to be authenticated is the target person. The threshold related to the total value may be provided in the integration determination unit 51 or may be stored in the memory 23. The integration determination unit 51 may calculate an integrated false acceptance ratio. The false acceptance ratio indicates a probability of false authentication in which a person who is not the actual person is recognized as the target person when it is determined whether the person to be authenticated is the target person with the predetermined threshold. For example, in a case where the false acceptance ratio is 1%, it indicates that the false authentication occurs once every 100 times. The integrated false acceptance ratio is a false acceptance ratio when determination is performed based on a plurality of pieces of biometric information, and is a value obtained by multiplying the false acceptance ratios based on respective pieces of biometric information and taking the reciprocal. For example, when the false acceptance ratio of the authentication using the biometric information related to the face of the person to be authenticated is 1% and the false acceptance ratio of the authentication using the biometric information related to the utterance is 10%, the integrated false acceptance ratio is 0.1%. In a case where a plurality of pieces of biometric information which are the basis of calculation of the integrated false acceptance ratio are not independent from each other, correction may be performed in consideration of the correlation between the pieces of biometric information.

The continued processing determination unit 52 acquires the score of the first biometric authentication and the reliability of the first biometric information calculated from the modal processing unit 60 or the modal processing unit 70. The continued processing determination unit 52 compares the score with a threshold related to the score, and compares the reliability with a threshold related to the reliability to determine whether to perform the second biometric authentication. The second biometric authentication is performed by acquiring biometric information different from the biometric information used for the biometric authentication performed. For example, when the biometric authentication is performed using the biometric information related to the face and it is determined that the second biometric authentication is necessary, the continued processing determination unit 52 performs the second biometric authentication using biometric information other than the face (for example, a fingerprint or an utterance).

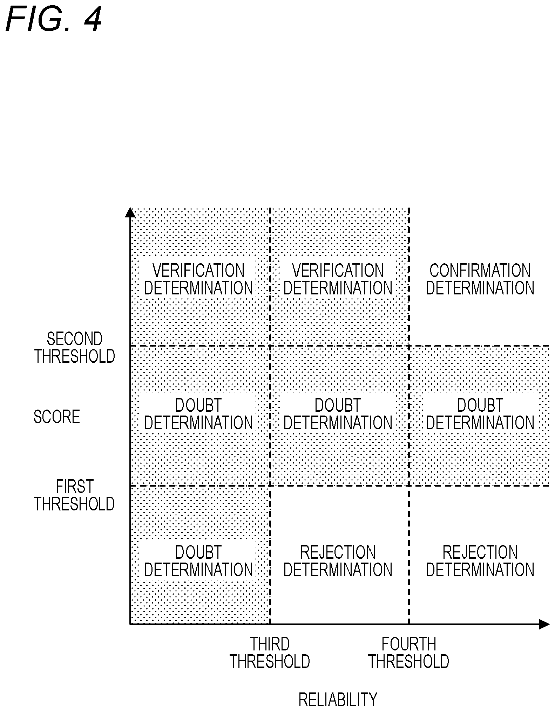

For example, the continued processing determination unit 52 determines which determination among confirmation determination, verification determination, doubt determination, and rejection determination (see FIG. 4) the first biometric authentication belongs to. The confirmation determination, the verification determination, the doubt determination, and the rejection determination are described in detail with reference to FIG. 4. The continued processing determination unit 52 determines whether to perform the second biometric authentication based on the determined determination result.

The system setting unit 53 sets the order of the biometric authentications. The order of the biometric authentications may be a predetermined order or may be the order determined by the continued processing determination unit 52. The system setting unit 53 also sets thresholds of the score and the reliability. The threshold of the score and the reliability may be a predetermined value or may be set by the system setting unit 53 according to the person to be authenticated or the surrounding environment information. For example, if it is known that the person to be authenticated is a twin since this information is registered in the user DB 30, the system setting unit 53 sets the threshold of the biometric information related to the face to be high. Further, the threshold of information with poor quality (such as poor image quality or poor sound quality) among the biometric information registered in the user DB 30 is set to be high. Information related to the predetermined order is stored in the system setting unit 53 or the memory 23. Information related to the predetermined thresholds of the score and the reliability is stored in the system setting unit 53, the modal processing unit 60, the modal processing unit 70, or the memory 23. Hereinafter, the order of the biometric authentications, the threshold of the score, and the threshold of the reliability set by the system setting unit 53 will be referred to as system setting information.

The user characteristic determination unit 54 extracts characteristics of the person used for the biometric authentication acquired from the user DB 30. An example of the characteristics is that the person to be authenticated is a twin. The user characteristic determination unit 54 outputs the extracted information to the system setting unit 53. The system setting unit 53 may acquire the characteristics of the person used for biometric authentication directly from the user DB 30.

The modal processing unit 60 executes processing using the biometric information or the surrounding environment information acquired from the sensor 20. The modal processing unit 60 includes a reliability determination unit 61 and a score calculation unit 62.

The reliability determination unit 61 acquires the surrounding environment information from the sensor 20 and determines the reliability of the biometric authentication.

The score calculation unit 62 acquires biometric information from the sensor 20 and calculates a score by comparing with the information registered in the user DB 30.

The modal processing unit 70 executes processing using biometric information different from that of the modal processing unit 60. Since the function of the modal processing unit 70 is similar to the function of the modal processing unit 60, the description thereof is omitted.

Hereinafter, calculation processing of the reliability and the score performed by the modal processing unit 60 or the modal processing unit 70 will be referred to as modal authentication.

### <Example of Case Classification of Determination Results of Biometric Authentication>

Next, an example of case classification of determination results according to the present embodiment will be described with reference to FIG. 4. FIG. 4 is a diagram illustrating the example of the case classification of the determination results according to the present embodiment.

In a graph shown in FIG. 4, a vertical axis indicates a value of the score, and the score increases along the direction of an arrow. The score includes a first threshold and a second threshold. The number of thresholds that the score has is not limited to two, but may be one, or may be two or more. For example, the first threshold is 30, and the second threshold is 70. The values of the first threshold and the second threshold are merely examples, and the present invention is not limited thereto.

In the graph shown in FIG. 4, a horizontal axis indicates a value of the reliability, and the reliability increases along the direction indicated by an arrow. The reliability includes a third threshold and a fourth threshold. The number of thresholds that the reliability has is not limited to two, but may be one, or may be two or more. For example, the third threshold is 30, and the fourth threshold is 70. The values of the third threshold and the fourth threshold are merely examples, and the present invention is not limited thereto.

A filled notation in the graph shown in FIG. 4 indicates that the second biometric authentication is required.

When the score of the first biometric authentication is equal to or greater than the second threshold and the reliability of the first biometric information is equal to or greater than the fourth threshold, the continued processing determination unit 52 determines the authentication result of the first biometric authentication of the person to be authenticated as the "confirmation determination" that the person to be authenticated is the target person. When the first biometric authentication is the confirmation determination, the continued processing determination unit 52 determines not to perform the second biometric authentication.

When the score of the first biometric authentication is less than the first threshold and the reliability of the first biometric information is equal to or greater than the third threshold, the continued processing determination unit 52 determines the authentication result of the first biometric authentication of the person to be authenticated as the "rejection determination" that the person to be authenticated is not the target person. When the first biometric authentication is the rejection determination, the continued processing determination unit 52 determines not to perform the second biometric authentication.

When the score of the first biometric authentication is equal to or greater than the first threshold and less than the second threshold or the score of the first biometric authentication is less than the first threshold, and the reliability of the first biometric information is less than the third threshold, the continued processing determination unit 52 determines the authentication result of the first biometric authentication of the person to be authenticated as the "doubt determination" that it is not determined whether the person to be authenticated is the target person. When the first biometric authentication is the doubt determination, the continued processing determination unit 52 determines to perform the second biometric authentication. For example, when the first biometric authentication is the doubt determination and the second biometric authentication is the confirmation determination, the integration determination unit 51 determines the approval determination.

When the score of the first biometric authentication is equal to or greater than the second threshold and the reliability of the first biometric information is less than the fourth threshold, the continued processing determination unit 52 determines the authentication result of the first biometric authentication of the person to be authenticated as the "verification determination" that it is not determined whether the person to be authenticated is the target person. When the first biometric authentication is the verification determination, the continued processing determination unit 52 determines to perform the second biometric authentication. For example, when the first biometric authentication is the verification determination and the second biometric authentication is the verification determination or the confirmation determination, the integration determination unit 51 determines the approval determination.

### <Embodiment 1>

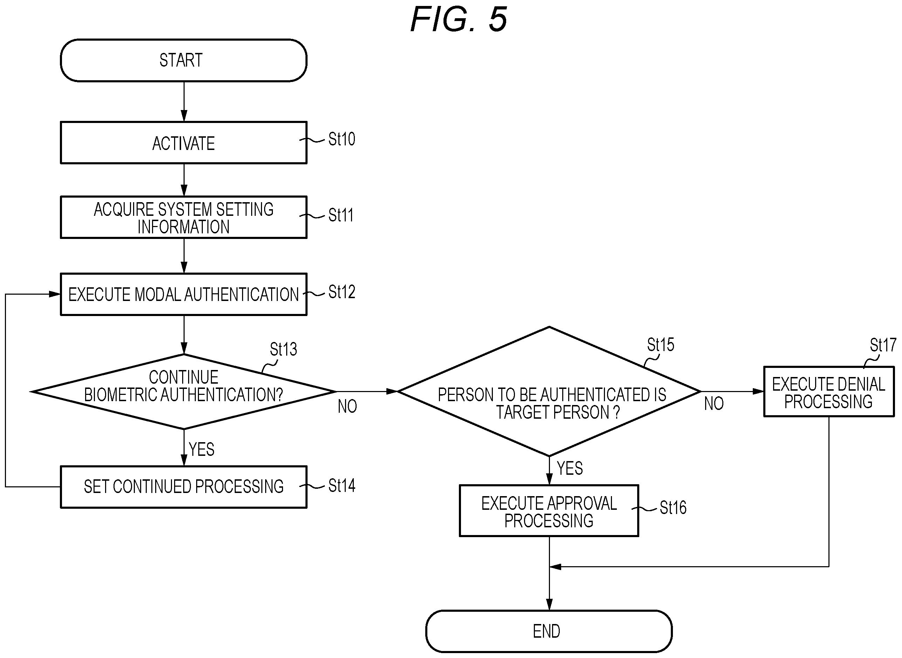

Next, continued processing of the biometric authentication according to Embodiment 1 will be described with reference to FIG. 5. FIG. 5 is a flowchart illustrating the continued processing of the biometric authentication according to Embodiment 1. Each processing according to FIG. 5 is executed by the processor 22.

The processor 22 activates the sensor 20 (step St10).

The system setting unit 53 acquires the system setting information from at least one of the memory 23 or the user DB 30 (step St11). The processor 22 acquires the biometric information used for the first biometric authentication from the sensor 20 based on the system setting information. For example, when the biometric authentication using the biometric information related to the face, as the first biometric authentication, is performed based on the system setting information, the processor 22 acquires the imaging data in which an image of the face of the person to be authenticated is captured from the face camera 201.

The modal processing unit 60 (or modal processing unit 70) performs the modal authentication based on the biometric information acquired from the sensor 20 (step St12). The modal processing unit 60 (or modal processing unit 70) transmits the score of the first biometric authentication and the reliability of the first biometric information calculated in the processing of step St12 to the continued processing determination unit 52.

The continued processing determination unit 52 determines whether to continue the biometric authentication from the score of the first biometric authentication and the reliability of the first biometric information acquired in the processing of step St12 (step St13). For example, the continued processing determination unit 52, based on the score of the first biometric authentication and the reliability of the first biometric information acquired in the processing of step St12, determines which determination result among the confirmation determination, the rejection determination, the doubt determination, and the verification determination the first biometric authentication belongs to. The continued processing determination unit 52 determines whether to continue the biometric authentication based on the determined determination result.

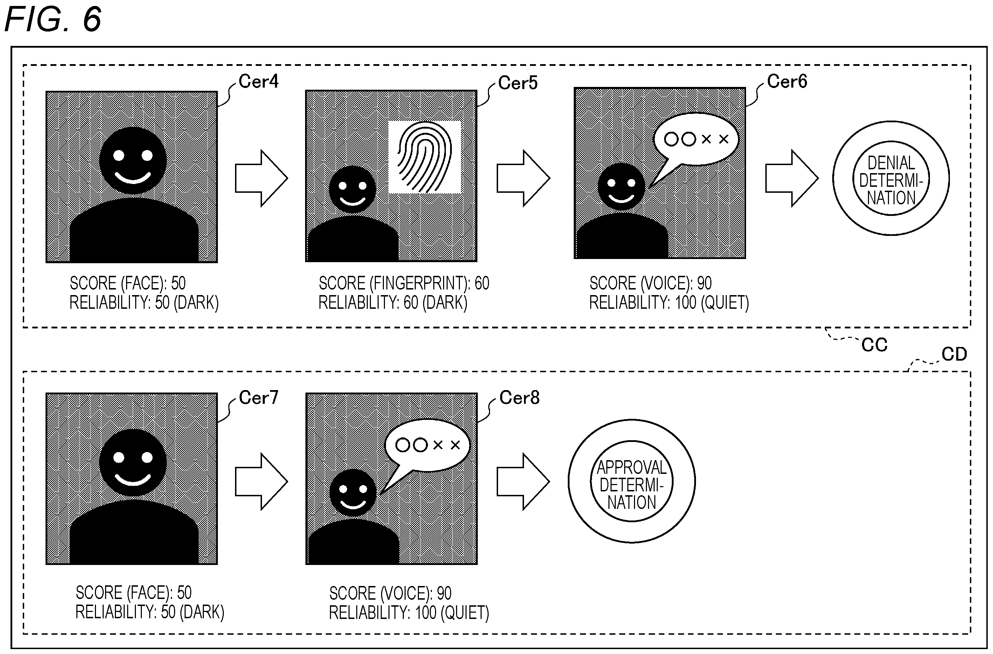

When it is determined in the processing of step St13 that the biometric authentication is to be continued (YES in step St13), the continued processing determination unit 52 sets the continued processing (step St14). The setting of the continued processing is, for example, setting which biometric information is to be used for the second biometric authentication. The continued processing determination unit 52 may determine which biometric information is to be used for the second biometric authentication based on the predetermined order. Further, the continued processing determination unit 52 may determine which biometric information is to be used for the second biometric authentication based on the reliability of the first biometric information. For example, when the first biometric information is the imaging data related to the face and the reliability is low (for example, when the first biometric information is less than the fourth threshold in the example illustrated in FIG. 4), the continued processing determination unit 52 determines that the second biometric authentication is the biometric authentication using the sound pickup data related to the utterance. A method of determining the biometric information to be used for the second biometric authentication based on the reliability of the first biometric information by the continued processing determination unit 52 will be described in detail with reference to FIG. 6.

After setting the continued processing in the processing of step St14, the continued processing determination unit 52 causes the modal processing unit 60 (or modal processing unit 70) to execute the modal authentication (for example, second biometric authentication) again.

When it is determined in the processing of step St13 that the biometric authentication is not to be continued (NO in step St13), the continued processing determination unit 52 transmits the determination result to the integration determination unit 51. The integration determination unit 51 determines whether the person to be authenticated is the target person (that is, the denial determination or the approval determination) based on the authentication result acquired from the continued processing determination unit 52 (step St15).

When it is determined that the person to be authenticated is the target person (YES in step St15), the integration determination unit 51 executes the approval processing (step St16). The approval processing is, for example, the integration determination unit 51 causing the display 21 to display a screen notifying that the person to be authenticated is the target person, or causing the driving device 40 to open the gate installed in the authentication device 10 or an external device (not illustrated). The example of the approval processing is merely an example, and the present invention is not limited thereto.

When it is determined that the person to be authenticated is the target person (NO in step St15), the integration determination unit 51 executes the denial processing (step St17). The denial processing is, for example, the integration determination unit 51 causing the display 21 to display a screen notifying that the person to be authenticated is not the target person, or causing the driving device 40 to close the gate installed in the authentication device 10 or the external device (not illustrated). The example of the denial processing is merely an example, and the present invention is not limited thereto.

Accordingly, the authentication device 10 determines whether to continue the authentication in consideration of the quality of the biometric information used for the authentication of the personal verification, thereby enabling more accurate authentication.

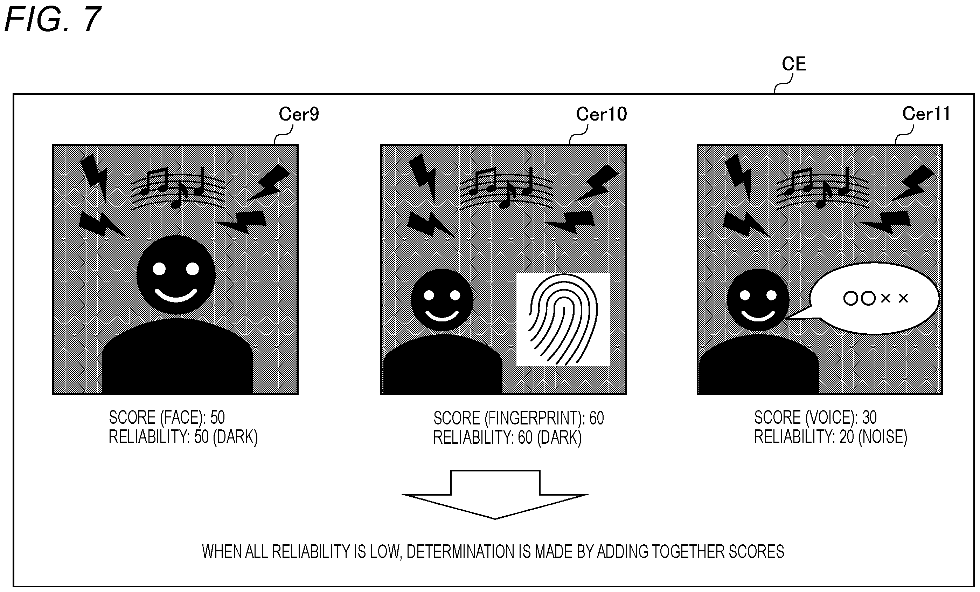

Next, a case of selecting the second biometric authentication based on the first biometric authentication will be described with reference to FIG. 6. FIG. 6 is a conceptual diagram of the case of selecting the second biometric authentication based on the first biometric authentication. It is assumed that each biometric authentication according to FIG. 6 is determined as the confirmation determination, the rejection determination, the doubt determination, or the verification determination according to the first threshold, the second threshold, the third threshold, and the fourth threshold described in FIG. 4. The value of the first threshold is 30, the value of the second threshold is 70, the value of the third threshold is 30, and the value of the fourth threshold is 70. The values of the thresholds are merely examples, and the present invention is not limited thereto. Each biometric authentication in FIGS. 7, 8, and 10 is also determined by similar thresholds.

A case CC is an example of performing the biometric authentication in the predetermined order.

Authentication Cer4 acquires biometric information related to the face of the person to be authenticated, and indicates a result of biometric authentication by comparing it with the biometric information of the person stored in the user DB 30 in advance. The score of the authentication Cer4 is 50, which is equal to or greater than the first threshold and less than the second threshold. In the authentication Cer4, since the biometric information related to the face is acquired in a dark environment in which the face of the person to be authenticated is unclear, the reliability is 50 and is equal to or greater than the third threshold and less than the fourth threshold. The authentication Cer4 is the doubt determination, and the continued processing determination unit 52 performs authentication Cer5 as the second biometric authentication.

The authentication Cer5 acquires biometric information related to the fingerprint of the person to be authenticated, and indicates a result of biometric authentication by comparing it with the biometric information of the person stored in the user DB 30 in advance. The score of the authentication Cer5 is 60, which is equal to or greater than the first threshold and less than the second threshold. In the authentication Cer5, since the biometric information related to the fingerprint is acquired in a dark environment in which the fingerprint of the person to be authenticated is unclear, the reliability is 50, which is equal to or greater than the third threshold and less than the fourth threshold. The authentication Cer5 is the doubt determination, and the continued processing determination unit 52 performs authentication Cer6 as the third biometric authentication (referred to as third biometric authentication).

The authentication Cer6 acquires biometric information related to the utterance of the person to be authenticated, and indicates a result of biometric authentication by comparing it with the biometric information of the person stored in the user DB 30 in advance. The score of the authentication Cer6 is 90, which is equal to or greater than the second threshold. In the authentication Cer6, since the biometric information related to the utterance is acquired in an environment quiet enough that the utterance of the person to be authenticated can be picked up clearly, the reliability is 100, which is equal to or greater than the fourth threshold. The authentication Cer6 is confirmation determination, and the continued processing determination unit 52 ends the biometric authentication and transmits the results of the authentication Cer4, the authentication Cer5, and the authentication Cer6 to the integration determination unit 51.

The integration determination unit 51 determines that the authentication of the personal verification of the person to be authenticated is the approval determination based on the information acquired from the continued processing determination unit 52.

A case CD indicates an example of determining the second biometric authentication performed by the continued processing determination unit 52 based on the first biometric authentication.

Authentication Cer7 acquires biometric information related to the face of the person to be authenticated, and indicates a result of biometric authentication by comparing it with the biometric information of the person stored in the user DB 30 in advance. The score of the authentication Cer7 is 50, which is equal to or greater than the first threshold and less than the second threshold. In the authentication Cer7, since the biometric information related to the face is acquired in a dark environment in which the face of the person to be authenticated is unclear, the reliability is 50, which is equal to or greater than the third threshold and less than the fourth threshold. The authentication Cer7 is the doubt determination, and the continued processing determination unit 52 performs the second biometric authentication.

When the first biometric authentication is the doubt determination or the verification determination and the first biometric information is the biometric information related to the imaging data (for example, the face or the fingerprint), the continued processing determination unit 52 determines that the second biometric authentication is biometric authentication using the biometric information related to the sound pickup data of the utterance. When the reliability of the biometric information related to the face, that is, the imaging data is low, it is expected that the reliability of the biometric information related to the fingerprint using the imaging data also decreases. Therefore, the reliability is expected to be higher in the case of using the sound pickup data in the second biometric authentication, and the biometric authentication may be ended in a smaller number of times than in the case CC.

Authentication Cer8 acquires biometric information related to the utterance of the person to be authenticated, and indicates an authentication result by comparing it with the biometric information of the person stored in the user DB 30 in advance. The score of the authentication Cer8 is 90, which is equal to or greater than the second threshold. In the authentication Cer8, since the biometric information related to the utterance is acquired in an environment quiet enough that the utterance of the person to be authenticated can be picked up clearly, the reliability is 100, which is equal to or greater than the fourth threshold. The authentication Cer8 is the confirmation determination, and the continued processing determination unit 52 ends the biometric authentication and transmits the results of the authentication Cer7 and the authentication Cer8 to the integration determination unit 51.

The integration determination unit 51 determines that the authentication of the personal verification of the person to be authenticated is the approval determination based on the results of the authentication Cer7 and the authentication Cer8 acquired from the continued processing determination unit 52.

Accordingly, since the authentication device 10 according to the first embodiment determines the second biometric information based on a result of the first biometric authentication, the number of times of authentication can be reduced, and complication involved in authenticating a user can be reduced.

Next, an example of a determination method when the reliability of all the biometric authentication is low will be described with reference to FIG. 7. FIG. 7 is a diagram illustrating the example of an authentication method when the reliability of all the biometric authentication is low.

A case CE shows an example of a determination method when the reliability of all the biometric authentications is low.

Authentication Cer9 acquires biometric information related to the face of the person to be authenticated, and indicates a result of biometric authentication by comparing it with the biometric information of the person stored in the user DB 30 in advance. The score of the authentication Cer9 is 50, which is equal to or greater than the first threshold and less than the second threshold. In the authentication Cer9, the environment is so dark that the face of the person to be authenticated becomes unclear, and there is so much noise that the utterance of the person to be authenticated becomes unclear. Therefore, the reliability of the authentication Cer9 is 50, which is equal to or greater than the third threshold and lower than the fourth threshold. The authentication Cer4 is the doubt determination.

The authentication Cer10 acquires biometric information related to the fingerprint of the person to be authenticated, and indicates a result of biometric authentication by comparing it with the biometric information of the person stored in the user DB 30 in advance. The score of the authentication Cer10 is 60, which is equal to or greater than the first threshold and less than the second threshold. In the authentication Cer10, the environment is so dark that the face of the person to be authenticated becomes unclear, and there is so much noise that the utterance of the person to be authenticated becomes unclear. Therefore, the reliability of the authentication Cer10 is 60, which is equal to or greater than the third threshold and less than the fourth threshold. The authentication Cer10 is the doubt determination.

Authentication Cer11 acquires biometric information related to the utterance of the person to be authenticated, and indicates a result of biometric authentication by comparing it with the biometric information of the person stored in the user DB 30 in advance. The score of the authentication Cer11 is 30, which is equal to or greater than the first threshold and less than the second threshold. In the authentication Cer11, the environment is so dark that the face of the person to be authenticated becomes unclear, and there is so much noise that the utterance of the person to be authenticated becomes unclear. Therefore, the reliability of the authentication Cer11 is 30, which is equal to or greater than the third threshold and less than the fourth threshold. The authentication Cer11 is the doubt determination.

The integration determination unit 51 acquires the scores and the reliability of the authentication Cer9, the authentication Cer10, and the authentication Cer11 from the continued processing determination unit 52. The integration determination unit 51 sums up the scores of the authentication Cer9, the authentication Cer10, and the authentication Cer11, compares the total score with the threshold, and performs the approval determination when the score is equal to or greater than the threshold. Note that the integration determination unit 51 may determine the approval determination or the denial determination in consideration of not only the total value of the scores but also the reliability of the authentication Cer9, the authentication Cer10, and the authentication Cer11, and also considering the result of comparison the total reliability with the threshold.

Accordingly, the authentication device 10 can perform highly accurate authentication by performing an integrated determination using a plurality of biometric authentications.

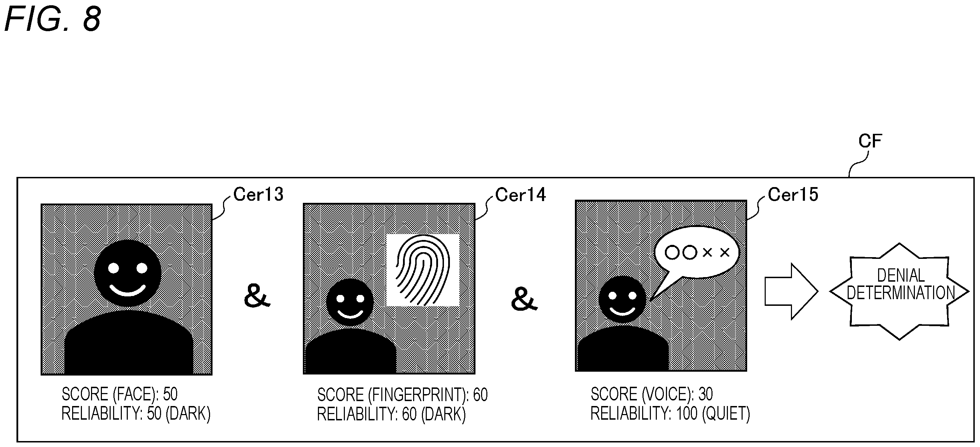

Next, an example in which it is determined from results of the plurality of biometric authentications that the person to be authenticated is not the target person will be described with reference to FIG. 8. FIG. 8 is a diagram illustrating an example in which it is determined from the results of the plurality of biometric authentications that the person to be authenticated is not the target person.

The case CF indicates an example of the denial determination from the results of the plurality of biometric authentications.

Authentication Cer13 acquires biometric information related to the face of the person to be authenticated, and indicates a result of biometric authentication by comparing it with the biometric information of the person stored in the user DB 30 in advance. The score of the authentication Cer13 is 50, which is equal to or greater than the first threshold and less than the second threshold. In the authentication Cer13, since the biometric information related to the face is acquired in a dark environment in which the face of the person to be authenticated is unclear, the reliability is 50, which is equal to or greater than the third threshold and less than the fourth threshold. The authentication Cer13 is the doubt determination.

The authentication Cer14 acquires biometric information related to the fingerprint of the person to be authenticated, and indicates a result of biometric authentication by comparing it with the biometric information of the person stored in the user DB 30 in advance. The score of the authentication Cer14 is 60, which is equal to or greater than the first threshold and less than the second threshold. In the authentication Cer14, since the biometric information related to the fingerprint is acquired in a dark environment in which the fingerprint of the person to be authenticated is unclear, the reliability is 60, which is equal to or greater than the third threshold and less than the fourth threshold. The authentication Cer14 is the doubt determination.

Authentication Cer15 acquires biometric information related to the utterance of the person to be authenticated, and indicates a result of biometric authentication by comparing it with the biometric information of the person stored in the user DB 30 in advance. The score of the authentication Cer15 is 20, which is less than the first threshold. In the authentication Cer15, since the biometric information related to the utterance is acquired in an environment quiet enough that the utterance of the person to be authenticated can be picked up clearly, the reliability is 100, which is equal to or greater than the fourth threshold. The authentication Cer15 is the rejection determination.

The integration determination unit 51 acquires the results of the authentication Cer13, the authentication Cer14, and the authentication Cer15 from the continued processing determination unit 52. When there is an authentication result with a high reliability and a low score (for example, rejection determination) among the plurality of biometric authentications, the integration determination unit 51 determines the authentication of the personal verification as the denial determination.

### <Embodiment 2>

In Embodiment 2, the authentication device 10 acquires information related to an external environment before start of first biometric authentication, and determines biometric information used for the first biometric authentication based on the acquired external environment.

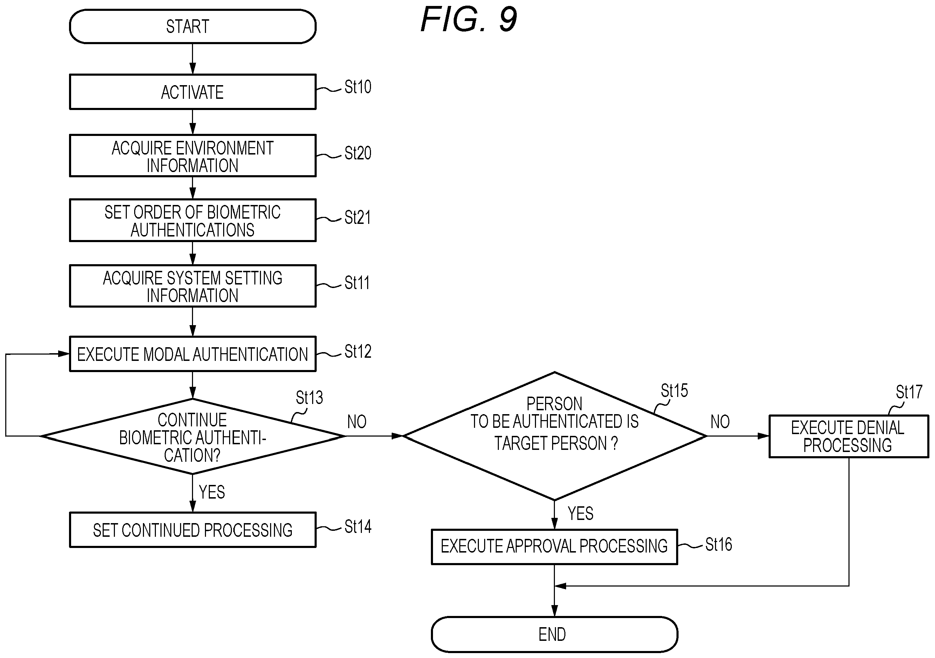

FIG. 9 illustrates continued processing of biometric authentication according to Embodiment 2. FIG. 9 is a flowchart of the continued processing of the biometric authentication according to Embodiment 2. Each processing according to FIG. 9 is executed by the processor 22. In the processing according to FIG. 9, the processing similar to that in FIG. 5 is denoted by the same reference numerals as in FIG. 5, and the description thereof is omitted.

After activating the sensor 20 in the processing of step St10, the processor 22 causes the sensor 20 to acquire information on the surrounding environment of the authentication device 10. The information on the surrounding environment is, for example, brightness or a noise level. The sensor 20 acquires the information on the surrounding environment based on a signal from the processor 22, and outputs the acquired information to the processor 22. The processor 22 acquires the information on the surrounding environment (step St20).

The continued processing determination unit determines the order of biometric authentications based on the information on the surrounding environment acquired in step St20 and transmits the order to the system setting unit 53. The system setting unit 53 sets the order of the biometric authentications (step St21). The processing after step St21 in FIG. 9 is similar to the processing in the flowchart in FIG. 5.

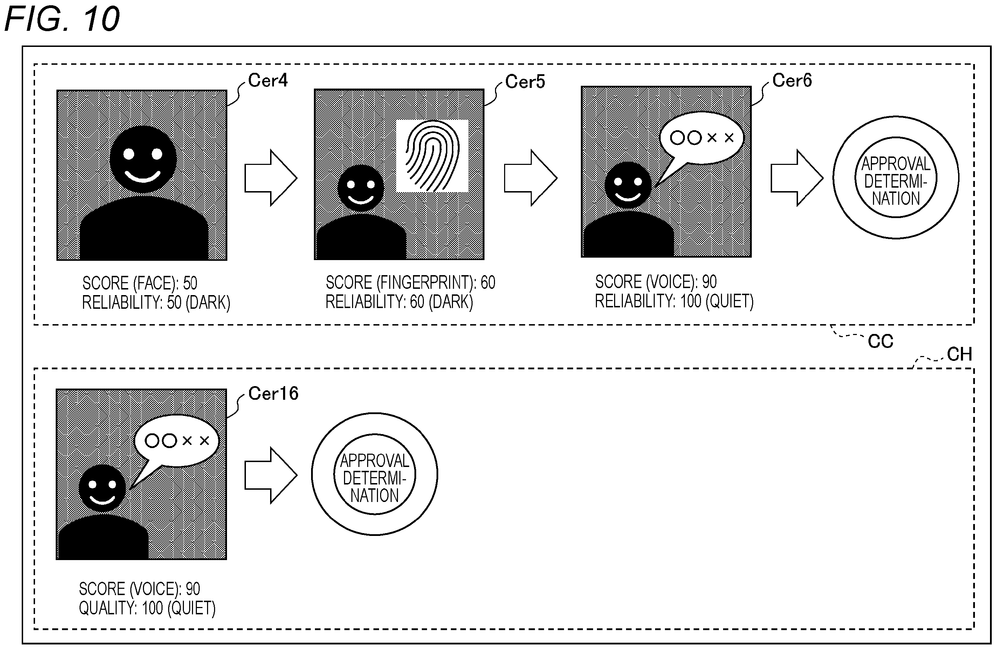

Next, an example of determining the first biometric authentication based on the information on the surrounding environment acquired before the start of the authentication will be described with reference to FIG. 10. FIG. 10 is a diagram illustrating the example of determining the first biometric authentication based on the information on the surrounding environment acquired before the start of the authentication.

The case CC shown in FIG. 10 is similar to the case CC shown in FIG. 6.

A case CH indicates an example of the approval determination using the first biometric authentication determined based on the information on the surrounding environment acquired before the start of the authentication.

The continued processing determination unit 52 acquires the information on the surrounding environment before start of the first biometric authentication, and performs the first biometric authentication using an utterance instead of the biometric authentication using the face and the fingerprint since the surrounding environment is dark. When the noise of the surrounding environment is large, the continued processing determination unit 52 executes, as the first biometric authentication, the biometric authentication using the face and the fingerprint.

Authentication Cer16 acquires biometric information related to the utterance of the person to be authenticated, and indicates a result of biometric authentication by comparing it with the biometric information of the person stored in the user DB 30 in advance. The score of the authentication Cer16 is 90, which is equal to or greater than the second threshold. In the authentication Cer16, since the biometric information related to the utterance is acquired in an environment quiet enough that the utterance of the person to be authenticated can be picked up clearly, the reliability is 100, which is equal to or greater than the fourth threshold. The authentication Cer16 is the confirmation determination, and the continued processing determination unit 52 ends the biometric authentication and transmits the results of the authentication Cer16 to the integration determination unit 51.

The integration determination unit 51 determines that the authentication of the personal verification of the person to be authenticated is the approval determination based on the results of the authentication Cer16 acquired from the continued processing determination unit 52.

Accordingly, since the authentication device 10 determines the first biometric authentication according to the situation of the surrounding environment, the number of times of authentication can be reduced, and complication involved in authenticating the person to be authenticated can be reduced.

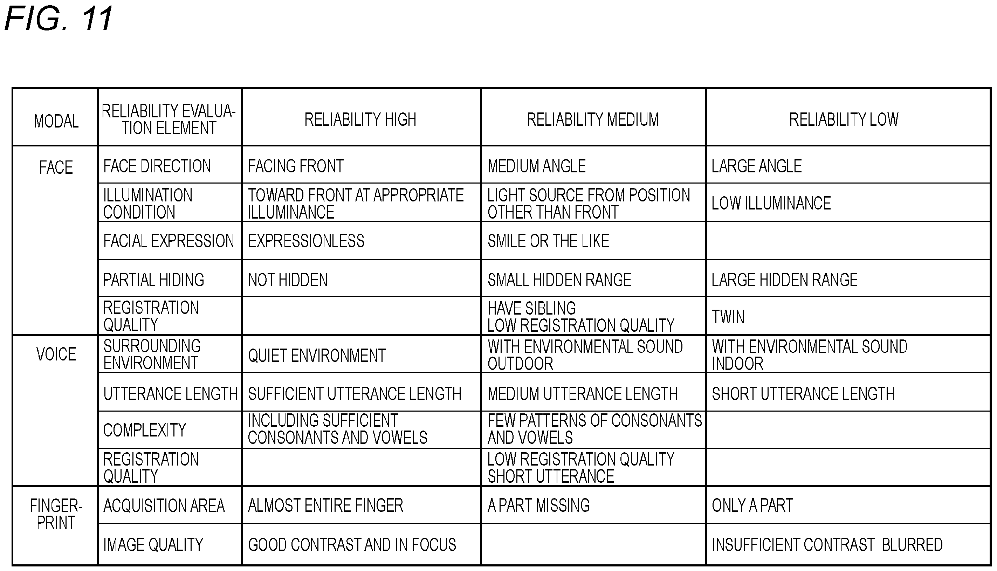

Next, an example of the reliability of each piece of biometric information will be described with reference to FIG. 11. FIG. 11 is a diagram illustrating an example of the reliability of each piece of biometric information.

For example, "high" of the reliability represents equal to or greater than the fourth threshold according to FIG. 4, "middle" represents equal to or greater than the third threshold and less than the fourth threshold, and "low" represents less than the third threshold. The possible ranges of "high", "middle", and "low" of the reliability are merely examples, and are not limited to the examples described above.

An evaluation element of the reliability (hereinafter, referred to as a reliability evaluation element) of the face is, for example, a face direction, an illumination condition, a facial expression, partial hiding, or registration quality. Examples of the reliability evaluation element of the face are not limited thereto.

When the reliability evaluation element of the face is the "face direction", the reliability changes at an angle of the face of the person to be authenticated with respect to the face camera 201. When the face direction is toward the front of the face camera 201, the reliability is "high". When the face direction has a medium angle with respect to the face camera 201, the reliability is "middle". When the face direction has a large angle with respect to the face camera 201, the reliability is "low".

When the reliability evaluation element of the face is the "illumination condition", the reliability changes depending on at least one of the incident direction or illuminance of the illumination light incident on the face of the person to be authenticated. When the illumination is incident on the face of the person to be authenticated from the front at an appropriate illuminance, the reliability is "high". When the illumination is incident on the face of the person to be authenticated from a position other than the front, the reliability is "middle". When the illumination is incident on the face of the person to be authenticated at low illuminance, the reliability is "low".

When the reliability evaluation element of the face is "facial expression", the reliability changes according to the facial expression of the person to be authenticated. When the facial expression of the person to be authenticated is expressionless, the reliability is "high". When the facial expression of the person to be authenticated is a smile or the like, the reliability is "middle".

In the case where the reliability evaluation element of the face is "partially hiding", the reliability changes at a ratio in which one portion of the face of the person to be authenticated is hidden by a mask, sunglasses, a hat, or the like. When the face of the person to be authenticated is not hidden, the reliability is "high". When a range in which the face of the person to be authenticated is hidden is small, the reliability is "middle". When the range in which the face of the person to be authenticated is hidden is large, the reliability is "low".

When the reliability evaluation element of the face is the "registration quality", the reliability changes depending on the presence or absence of a sibling of the person to be authenticated. When the person to be authenticated has a sibling, the reliability is "middle". When the person to be authenticated is a twin, the reliability is "low".

Next, the reliability evaluation element of the voice will be described. The reliability evaluation element of the voice is, for example, a surrounding environment, an utterance length, a complexity, or registration quality. Examples of the reliability evaluation element of the voice are not limited thereto.

When the reliability evaluation element of the voice is the "surrounding environment", the reliability is changed by at least one of environmental sound around the authentication device 10 or an installation location thereof. When the surrounding environment is a quiet environment, the reliability is "high". When the surrounding environment is an environment in which the environmental sound is present and the authentication device 10 is installed outdoors, the reliability is "middle". When the surrounding environment is an environment in which the environmental sound is present and the authentication device 10 is installed indoors, the reliability is "low".

When the reliability evaluation element of the voice is the "utterance length", the reliability changes according to a length of the utterance (hereinafter, referred to as utterance length) of the person to be authenticated included in the sound pickup data. When the sound pickup data has a sufficient utterance length, the reliability is "high". When the sound pickup data has a medium utterance length, the reliability is "middle". When the sound pickup data has only a short utterance length, the reliability is "low".

When the reliability evaluation element of the voice is "complexity", the reliability changes according to the number or patterns of consonants and vowels contained in the sound pickup data. When the sound pickup data includes sufficient consonants and vowels, the reliability is "high". When there are few patterns of consonants and vowels contained in the sound pickup data, the reliability is "middle".

When the reliability evaluation element of the voice is the "registration quality", the reliability changes according to the quality of the sound pickup data. When the registration quality of the sound pickup data is low and the utterance length is short, the reliability is "middle".

Next, the reliability evaluation element of the fingerprint will be described. The reliability evaluation element of the fingerprint is, for example, an acquisition area or image quality. Examples of the reliability evaluation element of the fingerprint are not limited thereto.

When the reliability evaluation element of the fingerprint is the "acquisition area", the reliability is changed according to the area of the acquired fingerprint corresponding to the size of the finger of the person to be authenticated. When the fingerprint of almost the entire finger is acquired, the reliability is "high". When a part of the fingerprint is missing, the reliability is "middle". When only a part of the fingerprint is acquired, the reliability is "low".

When the reliability evaluation element of the fingerprint is "image quality", the reliability changes according to a contrast or a focus. When the contrast is good and the image is in focus, the reliability is "high". When the imaging data is blurred due to insufficient contrast and lack of focus, the reliability is set to "low".

As described above, the authentication device 10 according to the present embodiment includes an acquisition unit (for example, the sensor 20) configured to acquire at least the first biometric information of the person to be authenticated used for the first biometric authentication and the first surrounding environment information at the time of acquiring the first biometric information. The authentication device 10 includes a score calculation unit (for example, the score calculation unit 62 or the score calculation unit 72) configured to calculate a score of the first biometric authentication using the first biometric information. The authentication device 10 includes a reliability determination unit (for example, the reliability determination unit 61 or the reliability determination unit 71) configured to determine the reliability of the first biometric information from the first surrounding environment information. The authentication device 10 includes a continued processing determination unit (for example, the continued processing determination unit 52) configured to determine whether to perform the second biometric authentication using the second biometric information different from the first biometric information based on the score of the first biometric authentication and the reliability of the first biometric information.

Accordingly, since the authentication device 10 according to the present embodiment can determine whether to perform the second biometric authentication based on the score of the first biometric authentication and the reliability of the first biometric information, it is possible to achieve highly accurate authentication in consideration of the quality of the biometric information used for the authentication of the personal verification.

Further, when the score of the first biometric authentication is less than the first threshold and the reliability of the first biometric information is equal to or greater than the third threshold, the continued processing determination unit according to the present embodiment determines an authentication result of the person to be authenticated as first determination that the person to be authenticated is not a target person, and ends the authentication of the person to be authenticated without performing the second biometric authentication. Accordingly, since the authentication device 10 can end the authentication of the personal verification without performing the second biometric authentication when the reliability of the first biometric authentication is significantly low, the complication involved in authenticating the person to be authenticated can be reduced.

Further, when the score of the first biometric authentication is equal to or greater than the second threshold and the reliability of the first biometric information is equal to or greater than the fourth threshold, the continued processing determination unit according to the present embodiment determines the authentication result of the person to be authenticated as second determination that the person to be authenticated is a target person, and ends the authentication of the person to be authenticated without performing the second biometric authentication. Accordingly, since the authentication device 10 can end the authentication of the personal verification without performing the second biometric authentication when the reliability of the first biometric authentication is significantly high, the complication involved in authenticating the person to be authenticated can be reduced.

Further, when the score of the first biometric authentication is equal to or greater than the first threshold and is less than the second threshold or the score of the first biometric authentication is less than the first threshold, and the reliability of the first biometric information is less than the third threshold, the continued processing determination unit according to the present embodiment determines the authentication result of the person to be authenticated as third determination, and determines to further perform the second biometric authentication. Accordingly, when the score of the first biometric authentication is not sufficiently high, since the authentication device 10 can perform the second biometric authentication, it is possible to achieve highly accurate authentication in consideration of the quality of the biometric information used for the authentication of the personal verification.

Further, when the authentication result is the third determination, the continued processing determination unit according to the present embodiment further performs the second biometric authentication using biometric information that is expected to have high reliability. Accordingly, since the authentication device 10 can perform the second biometric authentication by selecting the biometric authentication expected to have the high reliability, unnecessary authentication can be reduced, and the complication involved in authenticating the person to be authenticated can be reduced.

Further, when the score of the first biometric authentication is equal to or greater than the second threshold and the reliability of the first biometric information is less than the fourth threshold, the continued processing determination unit according to the present embodiment determines an authentication result of the person to be authenticated as fourth determination, and determines to further perform the second biometric authentication. Accordingly, when the score of the first biometric authentication is sufficiently high but the reliability is low, since the authentication device 10 can perform the second biometric authentication, it is possible to achieve highly accurate authentication in consideration of the quality of the biometric information used for the authentication of the personal verification.

Further, when the score of the first biometric authentication is equal to or greater than the first threshold and is less than the second threshold or the score of the first biometric authentication is less than the first threshold, and the reliability of the first biometric information is less than the third threshold, the continued processing determination unit according to the present embodiment determines the authentication result of the person to be authenticated as third determination. When the score of the first biometric authentication is equal to or greater than the second threshold and the reliability of the first biometric information is less than the fourth threshold, the continued processing determination unit determines an authentication result of the person to be authenticated as fourth determination. The continued processing determination unit determines to further perform the second biometric authentication in a case of the third determination and the fourth determination. Thus, when the score of the first biometric authentication is not sufficiently high or the score of the first biometric authentication is sufficiently high and the reliability is low, since the authentication device 10 can perform the second biometric authentication, it is possible to achieve highly accurate authentication in consideration of the quality of the biometric information used for the authentication of the personal verification.

Further, the authentication device 10 according to the present embodiment further includes: an integration determination unit (for example, the integration determination unit 51) configured to determine that the person to be authenticated is a target person when both the authentication result of the first biometric authentication using the first biometric information and the authentication result of the second biometric authentication using the second biometric information are the third determination or the fourth determination, and when a total value of the scores of the first biometric authentication and the second biometric authentication is equal to or greater than a predetermined value. Accordingly, when the total value of the scores is equal to or greater than the predetermined value even when the scores of the first biometric authentication and the second biometric authentication are not sufficiently high, the authentication device 10 can perform an integrated determination that the person to be authenticated is the target person. Accordingly, the authentication device 10 can achieve highly accurate authentication using the plurality of pieces of biometric information.

Further, in the authentication device according to the present embodiment, when both the authentication result of the first biometric authentication using the first biometric information and the authentication result of the second biometric authentication using the second biometric information are the third determination or the fourth determination, and the total value of the scores of the respective biometric authentications is less than the predetermined value, the integration determination unit determines that the person to be authenticated is not the target person. Accordingly, when the total value of the scores is less than the predetermined value even when the scores of the first biometric authentication and the second biometric authentication are not sufficiently high, the authentication device 10 can perform an integrated determination that the person to be authenticated is not the target person. Accordingly, the authentication device 10 can achieve highly accurate authentication using the plurality of pieces of biometric information.

Further, the continued processing determination unit according to the present embodiment determines an execution order of the first biometric authentication and the second biometric authentication based on the first surrounding environment information. Accordingly, since the authentication device 10 can determine the execution order of the first biometric authentication and the second biometric authentication from the first surrounding environment information, the authentication suitable for the first surrounding environment information is preferentially performed.

Further, the acquisition unit according to the present embodiment acquires the second biometric information of the person to be authenticated used for the second biometric authentication and second surrounding environment information at the time of acquiring the second biometric information. The continued processing determination unit starts from the first biometric authentication or the second biometric authentication corresponding to a higher one of the reliability of the first biometric information and the reliability of the second biometric information based on the first surrounding environment information and the second surrounding environment information acquired in advance by the acquisition unit. Accordingly, since the authentication device 10 can preferentially perform the biometric authentication expected to have high reliability from the first surrounding environment information, the number of times of authentication can be reduced, and the complication involved in authenticating the person to be authenticated can be reduced.

Further, the first biometric information according to the present embodiment is imaging data of a face, fingerprint data, or utterance voice data of the person to be authenticated. Accordingly, the authentication device 10 can perform the biometric authentication using each piece of biometric information.

Further, the integration determination unit according to the present embodiment calculates a false acceptance ratio of the person to be authenticated based on the authentication result of the first biometric authentication and the authentication result of the second biometric authentication. Accordingly, the authentication device 10 can present the calculated false acceptance ratio to the person to be authenticated and can notify the person to be authenticated of the accuracy of the authentication results.

Further, the reliability determination unit according to the present embodiment calculates the reliability of the first biometric information based on a face direction of the person to be authenticated, an illumination condition, a facial expression, an utterance length, the number of phonemes, an image quality, or a fingerprint acquisition area. Accordingly, the authentication device 10 can determine the reliability of the first biometric information based on various conditions.

Although the embodiments have been described above with reference to the accompanying drawings, the present disclosure is not limited thereto. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, constituent elements in the embodiments described above may be freely combined without departing from the gist of the invention.

The present disclosure is based on Japanese Patent Application No. 2022-094622 filed on June 10, 2022, and the contents thereof are incorporated herein by reference.

### INDUSTRIAL APPLICABILITY

The technique of the present disclosure is useful as an authentication device and an authentication method for achieving highly accurate authentication in consideration of the quality of biometric information used for authentication of personal verification.

### REFERENCE SIGNS LIST

1: authentication system
10: authentication device
20: sensor
21: display
22: processor
23: memory
24: input device
25: communication IF
30: user B
40: driving device
50: overall control unit
51: integration determination unit
52: continued processing determination unit
53: system setting unit
54: user characteristic determination unit
60, 70: modal processing unit
61, 71: reliability determination unit
62, 72: score calculation unit
201: face camera
202: fingerprint camera
203: microphone
CA, CB, CC, CD, CE, CF, CH: case
Cer1, Cer2, Cer3, Cer4, Cer5, Cer6, Cer7, Cer8, Cer9, Cer10, Cer11, Cer13, Cer14, Cer15, Cer16: authentication

## Claims

1. An authentication device comprising:
an acquisition unit configured to acquire at least first biometric information of a person to be authenticated used for first biometric authentication and first surrounding environment information at the time of acquiring the first biometric information;
a score calculation unit configured to calculate a score of the first biometric authentication using the first biometric information;
a reliability determination unit configured to determine reliability of the first biometric information from the first surrounding environment information; and
a continued processing determination unit configured to determine whether to perform second biometric authentication using second biometric information different from the first biometric information based on the score of the first biometric authentication and the reliability of the first biometric information.

2. The authentication device according to claim 1, wherein
when the score of the first biometric authentication is less than a first threshold and the reliability of the first biometric information is equal to or greater than a third threshold, the continued processing determination unit determines an authentication result of the person to be authenticated as first determination that the person to be authenticated is not a target person, and ends the authentication of the person to be authenticated without performing the second biometric authentication.

3. The authentication device according to claim 1, wherein
when the score of the first biometric authentication is equal to or greater than a second threshold and the reliability of the first biometric information is equal to or greater than a fourth threshold, the continued processing determination unit determines an authentication result of the person to be authenticated as second determination that the person to be authenticated is a target person, and ends the authentication of the person to be authenticated without performing the second biometric authentication.

4. The authentication device according to claim 1, wherein
when the score of the first biometric authentication is equal to or greater than the first threshold and is less than the second threshold or the score of the first biometric authentication is less than the first threshold, and the reliability of the first biometric information is less than a third threshold, the continued processing determination unit determines an authentication result of the person to be authenticated as third determination, and determines to further perform the second biometric authentication.

5. The authentication device according to claim 4, wherein
when the authentication result is the third determination, the continued processing determination unit further performs the second biometric authentication using biometric information that is expected to have high reliability.

6. The authentication device according to claim 1, wherein
when the score of the first biometric authentication is equal to or greater than a second threshold and the reliability of the first biometric information is less than a fourth threshold, the continued processing determination unit determines an authentication result of the person to be authenticated as fourth determination, and determines to further perform the second biometric authentication.

7. The authentication device according to claim 1, wherein
the continued processing determination unit
determines an authentication result of the person to be authenticated as a third determination when the score of the first biometric authentication is equal to or greater than a first threshold and less than a second threshold or the score of the first biometric authentication is less than the first threshold, and the reliability of the first biometric information is less than a third threshold,
determines an authentication result of the person to be authenticated as fourth determination when the score of the first biometric authentication is equal to or greater than a second threshold and the reliability of the first biometric information is less than a fourth threshold, and
determines to further perform the second biometric authentication in a case of the third determination and the fourth determination.

8. The authentication device according to claim 7, further comprising:
an integration determination unit configured to determine that the person to be authenticated is a target person when both the authentication result of the first biometric authentication using the first biometric information and the authentication result of the second biometric authentication using the second biometric information are the third determination or the fourth determination, and when a total value of the scores of the first biometric authentication and the second biometric authentication is equal to or greater than a predetermined value.

9. The authentication device according to claim 8, wherein
when both the authentication result of the first biometric authentication using the first biometric information and the authentication result of the second biometric authentication using the second biometric information are the third determination or the fourth determination, and the total value of the scores of the respective biometric authentications is less than the predetermined value, the integration determination unit determines that the person to be authenticated is not the target person.

10. The authentication device according to claim 1, wherein
the continued processing determination unit determines an execution order of the first biometric authentication and the second biometric authentication based on the first surrounding environment information.

11. The authentication device according to claim 10, wherein
the acquisition unit acquires the second biometric information of the person to be authenticated used for the second biometric authentication and second surrounding environment information at the time of acquiring the second biometric information, and
the continued processing determination unit starts from the first biometric authentication or the second biometric authentication corresponding to a higher one of the reliability of the first biometric information and the reliability of the second biometric information based on the first surrounding environment information and the second surrounding environment information acquired in advance by the acquisition unit.

12. The authentication device according to claim 1, wherein
the first biometric information is imaging data of a face, fingerprint data, or utterance voice data of the person to be authenticated.

13. The authentication device according to claim 8, wherein
the integration determination unit calculates a false acceptance ratio of the person to be authenticated based on the authentication result of the first biometric authentication and the authentication result of the second biometric authentication.

14. The authentication device according to claim 1, wherein
the reliability determination unit calculates the reliability of the first biometric information based on a face direction of the person to be authenticated, an illumination condition, a facial expression, an utterance length, the number of phonemes, an image quality, or a fingerprint acquisition area.

15. An authentication method performed by an authentication device that performs personal verification of a person to be authenticated, the authentication method comprising:
acquiring at least first biometric information of the person to be authenticated used for first biometric authentication and first surrounding environment information at the time of acquiring the first biometric information;
calculating a score of the first biometric authentication using the first biometric information;
determining reliability of the first biometric information from the first surrounding environment information; and
determining whether to perform second biometric authentication using second biometric information different from the first biometric information based on the score of the first biometric authentication and the reliability of the first biometric information.
